# EUROPEAN PATENT SPECIFICATION

(11) **EP 1 210 615 B1**
(45) Date of publication and mention of the grant of the patent: **26.03.2003**
(21) Application number: 00957140.7
(22) Date of filing: 24.08.2000
(51) Int. Cl.: G01S 5/06, G01S 13/87

(54) **SYSTEM FOR DETERMINING THE POSITION OF A TRANSPONDER**
VORRICHTUNG ZUR BESTIMMUNG DER POSITION EINES TRANSPONDERS
SYSTEME DE DETERMINATION DE LA POSITION D'UN TRANSPONDEUR

(30) Priority: 25.08.1999 NL 1012907
(43) Date of publication of application: 05.06.2002
(73) Proprietor: AMB -IT Holding B.V., 2105 MB Heemstede (NL)
(72) Inventor: BERVOETS, Alfonsus, Maria, NL-2116 TL Bentveld (NL); HIN, Franciscus, Robertus, Albertus, Cornelis, B-3910 Neerpelt (BE)
(74) Representative: de Vries, Johannes Hendrik Fokke
(86) International application number: PCT/NL00/00590
(87) International publication number: WO 01/014905

(56) References cited:
- EP-A- 0 715 185
- EP-A- 0 802 515
- DE-A- 2 843 253
- US-A- 4 757 315
- US-A- 5 406 275
- US-A- 5 621 411
- US-A- 5 790 052

## Description

The invention relates to a system for determining the position of a transponder which moves along a course.

### STATE OF THE ART

Such systems are known from the state of the art. In these systems in general the object is to determine the position in the direction of movement whereby field strength measurements are used. An example thereof is described in US5621411.

In certain cases it is desirable to know the position of the transponder in a direction transverse to the course. An example thereof are the toll-installations on multi lane auto-routes. Therewith it is important to make clear in which lane a vehicle is present before the necessary data are exchanged with said vehicle in relation to the toll charging. Charging toll from a vehicle in a neighbouring lane has to be prevented.

An example of means for determining in which lane a vehicle is present in the neighbourhood of a toll charging installation is described in US5406275. In this known system one detection station per lane is used whereby care has to be taken that each detection station almost exclusively detects its own lane and causes as less as possible disturbance in the neighbouring detection stations. In this publication also the above mentioned distance measurements by means of field strength measurements are described.

This prior art system is based on clearly distinguishable lanes and has per lane separate hardware necessary to perform the required measurements.

Another example of circumstances whereby it is often desirable to know the position of the transponder in a direction transverse to the course along which the transponder is moving is formed by auto races, races with karats, skelters, bicycles of other vehicles, horseraces, houndraces and all other races which take place on a specific course. Especially at those places which are not in view of an observer it might be important to know which contestant has the innerlane, the outerlane or moves on the middle of the road, etc.

### OBJECT OF THE INVENTION

The object of the invention is now to determine the position of the transponder in transversal direction in relation to a course without the necessity to divide the course in transversal direction in clearly distinghuised and electromagnetically screened lanes which each should have its own measuring station.

### BRIEF DESCRIPTION OF THE INVENTION

The above mentioned object is fulfilled by a system for determining the position of a transponder, which transmits a signal and moves along a route with at least a measuring station comprising antenna means for receiving said signal at least at two measuring points positioned at the two outer points of a line segment which crosses the course in a perpendicular manner, whereby said measuring station comprises:
- a first receiver for receiving said signal through said antenna means at the one measuring point and
- a second receiver for receiving said signal through said antenna means at the other measuring point,
- high frequency phase measuring means measuring the phase difference between the output signal of the first receiver and the outputsignal of the second receiver,
- evaluation means which, based on the measured phase difference, determines where the transponder passes said line segment.

I case the transponder is moving exactly in the middle of the road then at both measuring points signal with equal phase will be received. If the transponder is present more to the left side of the course then a predetermined phase difference will be measured. If the transponder is moving more to the right side of the course then a predetermined opposite phase difference will be measured.

Depending on the applied frequency and the width of the course it is possible that a number of phase zeros will be measured spread over the length of the line segment between both measuring points. That makes it impossible for the evaluation unit to determine the position in an unambiguous manner.

There are a number of possibilities to eliminate this unambiguity. In the first place one could think of lowering the signal frequency. However, in general the applied frequencies are bounded to various national and international agreements which in general prevent a variation of the signal frequency. However, applying a modulation is possible whereby a relatively low modulation frequency can be selected. In that case not the signal itself but the modulation frequency is used for the phase measuring.

A system which is embodied according to thios principle has the characteristic that the transponder transmits a modulated signal, that the first receiver is followed by a first demodulator for demodulating the received signal, that the second receiver is followed by a second demodulator for demodulating the received signal, and that low frequency phase measuring means measure the phase difference between the output signal of the first demodulator and the output signal of the second demodulator. In this system not the phase of the carrier wave but the phase of the modulating signal is measured of which the frequency is much lower and by means of which a line segment with a larger length (and therefore a course with a larger width) can be covered unambiguously without a number of zero phase measuring points.

A disadvantage of the above mentioned system may be that the accuracy of the location determination based on relatively low frequency modulation signal is lower than in case the higher frequency signals would be used. To solve said problem, it is preferred to combine both embodiments such that the evaluation means use the output signal of the low frequency phase measuring means for "coarse" position determination whereas the output signal of the high frequency phase measuring means is used for "fine" position determining.

In principle various types of modulation can be used, amplitude modulation, frequency modulation, phase modulation, etc. A type of modulation which needs only very simple circuits to obtain a properly functioning system is amplitude modulation whereby the modulation signal is a pulse series by means of which the amplitude of the carrier wave is modulated between 0% and 100%. In other words the transponder transmits signal trains.

Another possibility to remove the uncertainty as resulting from various zero crossings is reducing the line segment and apply a serious circuit of a number of smaller line segments. The length of each smaller line segment has to be such that within each line segment an unambiguous measurement can be performed. To be able to determine which line segment will supply the correct measuring value use can be made of a field strength measurement in each of the measuring points. The line segment which is bounded by those measuring points which together have the strongest sum signal is selected.

A system functioning according to this principle has the characteristic that between both ends of said line segment another N measuring points are realised such that the line segment is divided by N+2 measuring points into N+1 segments each having a length which is small enough to realise an unambiguous measurement within said segment, whereby the N+2 measuring points are connected to N+2 receivers, the output of each of said receivers is connected to a field strength measuring means, the output signals of all field strength measuring means are evaluated in a comparison circuit, which comparison circuit transfers the output signals of those two receivers having together the largest field strength, to a phase comparator to be mutually compared whereafter the resulting output signal of the phase comparator controls an evaluation unit.

Instead of field strength measurements a combination of carrier measurements and modulation signal measurements is conceivable. In that case the system comprises an first elongated loop antenna which is used for p-hase measurements of the modulation signals at the end points in the above described manner. The result thereof is a position with a relative low accuracy. The system comprises in that case a second antenna having a series circuit of small loop antennas which are used each for a phase measurement based on the carrier signal at the ends of each small loop antenna. Th position with low accuracy is used to select one of the small loup antennas. The phase measurement on this selected small loop antenna results into a position with a relatively high accuracy. A disadvantage of this embodiment is the rather complicated antenna system, necessary for performing the measurements.

A further preferred embodiment of the system has according to the invention the characteristic that the measurement is repeated a number of times in a row, whereafter the results are interpolated such that from the results the track can be derived which was followed by the transponder within said course.

### INDICATION OF THE FIGURES

The invention will be explained in more detail hereinafter with reference to the attached drawings.
Figure 1 illustrates schematically a perspective view on a part of a course, whereby at both sides of the course a receiving antenna of a measuring station is installed.
Figure 2 illustrates a top view on a measuring station with a loop shaped antenna on or in the surface of the course.
Figure 3 illustrates another embodiment of the electronics in the measuring station.
Figure 4 illustrates an embodiment whereby the modulation signal is used for "course" position determination and the high frequency carrier signal is used for "fine" position determination.
Figure 5 illustrates schematically an embodiment in which use is made of an antenna consisting of the series circuit of a number of loops.
Figure 6 illustrates schematically the exact route of a vehicle as function of a number of measurements performed by the system.

### FIGURE DESCRIPTION

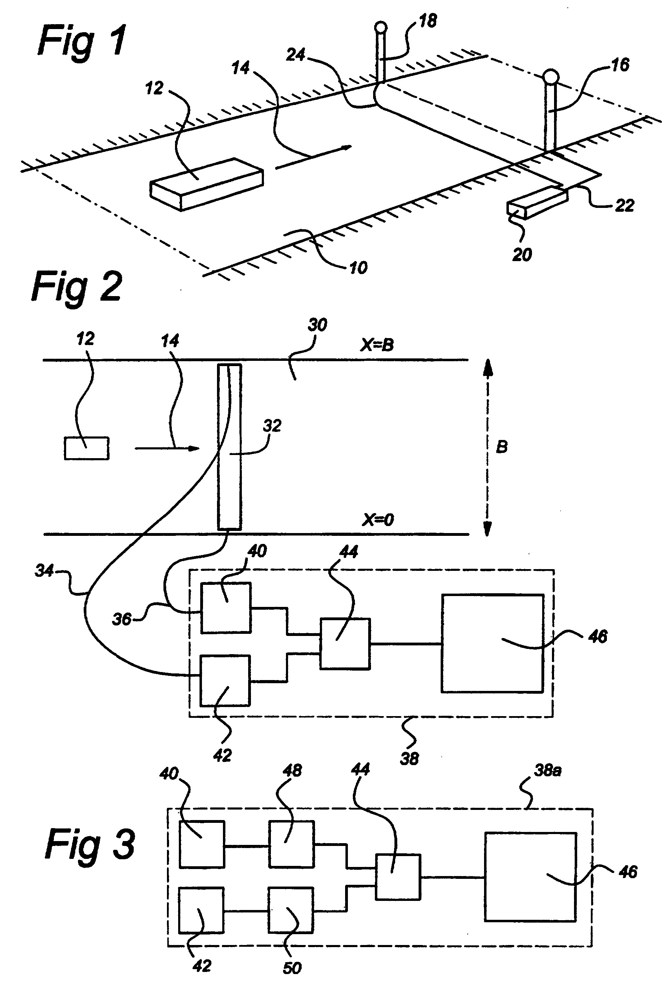

Figure 1 illustrates schematically a part of a course 10, e.g. part of a road, along which a transponder 12 is moving in the direction of the arrow 14. The transponder 12 will in a practical case be attached in or on an automobile, a motorbike or another vehicle, or to a human or animal, and will thereby be moved along the course 10 in the indicated direction.

At a number of places along the course measuring means are installed by means of which the position of the transponder 12 in transversal direction can be determined. In figure 1 such a measuring post is illustrated comprising an antenna 16 at one side of the road and an antenna 18 at the other side of the road, an electronics unit 20 which through a line 22 is connected to the antenna 16 and through a line 24 is connected to the antenna 18.

During operation the transponder 12 will transmit with short intermediate distances a signal which could be a continuous sinewave with predetermined frequency but could also be a modulated carrier wave. Preferably in the last mentioned case the carrier wave is modulated by a pulse series of significant lower frequency so that "signal trains" are formed.

For the coming part of this description it is assumed that the transponder transmits a continuous and preferably sinusoidal signal. This transmitted signal is received by both antennas 16 and 18. The received signals are transferred through lines 22 and 24 to the electronics units 20 in which the signals are phase compared with each other. If it is assumed furthermore that the signal lines 22 and 24 have the same length then it will be clear that, in case the transponder 12 is on the middle of the road, and the distance between the transponder 12 and the antenna 16 is identical to the distance between the transponder 12 and the antenna 18, both received signals in the electronics circuit 20 have the same phase. A phase difference 0 indicates therefore that the transponder 12 is in the middle of the road (or at least can be there). In case the transponder 12 is deviating from the middle of the road to the left then between both received signals a certain phase difference will be developed. If the transponder 12 deviates from the middle of the road into the right direction then in both received signals an opposite phase difference will be developed. If both lines 22 and 24 are not exactly of the same length then this will cause a fixed phase difference for which compensation can be provided as will be clear for the expert in this field. A similar note can be made by other embodiments of the system which will be described hereinafter.

A disadvantage of the schematically illustrated system in figure 1 is that this system can be realised in practice only for rather high carrier frequencies. Only then the dimensions of the antennas 16 and 18 will be such they are allowable in practice. Many of the momentarily used transponder applications, for instance for tracking vehicles along certain road sections, make use of much lower carrier frequencies. In that case it is preferred to use another antenna configuration as schematically illustrated in figure 2.

In figure 2 the course in top view is indicated in general by 30. In an imaginary coordinate system the direction of movement 14 of the transponder 12 equals the Y-direction. Transversal to this direction, in other words in the width direction of the course 30 the X-direction is assumed whereby in the example of figure 2 the lower side of the course overlaps X=0 whereas the upper side edge of the course overlaps X=B, whereby B is the width of the course 30. On the traject a loop shaped antenna 32 is installed comprising two long parallel conductors extending at short distance of each other which at X=0 and X=B are connected by short transversal conductors. The short transversal conductors are through the conduits 34 and 36 in connection with the electronic unit 38. In this electronic unit 38 two receivers 40 and 42 are positioned as well as a phase measuring unit 44 and an evaluation unit 46.

The signals measured at the ends of the loop antenna 32 are through lines 34 and 36 supplied to the receivers 40 and 42 and there amplified up to a desired level. The output signals of the receivers 40 and 42 are in a phase measuring unit 44 compared in phase with each other resulting into a phase output signal. This phase output signal is supplied to an evaluation unit 46 which derives an X-value from this phase signal. If the transponder is located exactly in the middle of the road then the unit 46 will provide a value X=B if the transponder is located more to the lower side of the road then the unit 46 will for instance provide the signal X=X1, whereby X1 <½B, whereas if the transponder 12 is more located to the upperside the unit 46 can supply for instance a signal X =X2 whereby X2>½B is.

Dependent on the selected carrier wave frequency and dependent on the width B of the course it will happen that a number of 0 points are developing on the loup shaped antenna 32 so that the measurement is not unambiguous anymore. To provide a remedy it is for instance possible to make use of a modulated carrier wave instead of a continuous carrier wave whereby for the phase measurement not the carrier wave but the modulation signal with a much lower frequency is used. The electronics unit 38a is in that case extended by 2 demodulators in the way, as schematically is illustrated in figure 3. A first demodulator 48 is installed between the receiver 40 and the phase measuring unit 44 whereas a second demodulator 50 can be placed between the receiver 42 and the phase measuring unit 44. By adding these both demodulators 48 and 50 in the phase measuring unit 54 the phase difference between the modulation signals is measured. Because thereby signals with a very low frequency are involved it is now possible by a suitable selection of the frequency to reduce the number of zero points in the output signal of the unit 44 to only one. The evaluation unit 46 is able therewith to indicate unambiguously within the course X=0 and X=B where the transponder 12 is located.

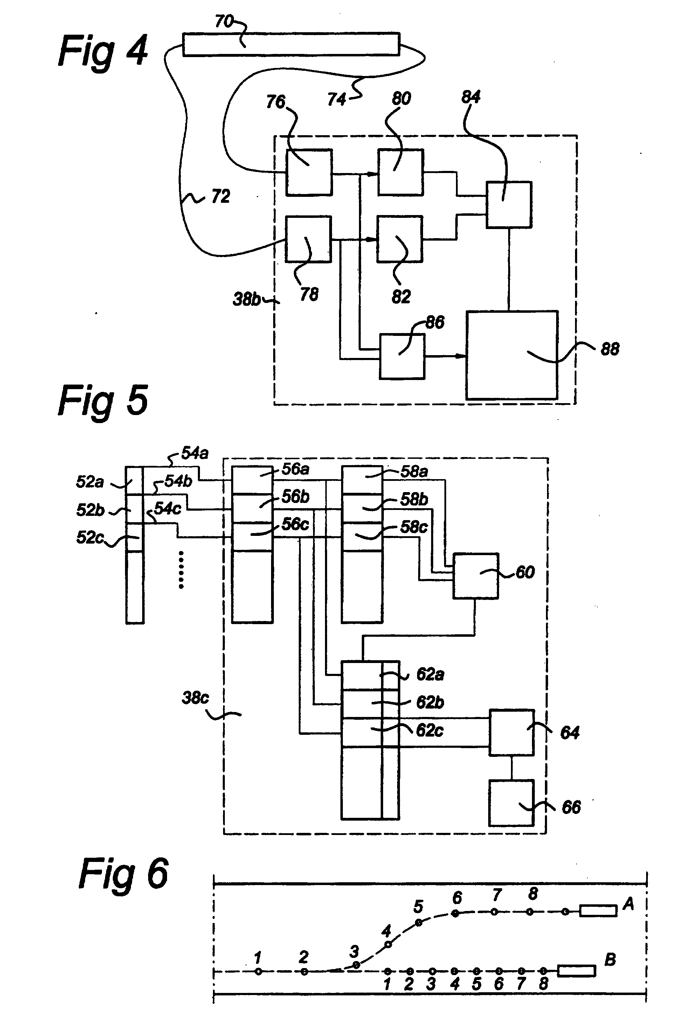

A disadvantage of the use of relatively low frequency modulation signals can be that the therewith-obtained accuracy in the position determination is lower than in case the higher frequency carrier wave is applied. In the embodiment which is schematically illustrated in figure 4 the advantages of both embodiments are combined. The elongated loop antenna which is present in or on the course is in that case indicated by 70. The ends of the antenna 70 are through lines 72 and 74 connected with the respective receiver 76 and 78. Each of the receivers supplies a high frequency modulated signal to one of the respective demodulators 80 and 82. The lower frequent modulation signals at the outputs of the demodulators 80 and 82 are supplied to the inputs of the phase comparator 84.

The high frequency output signals of the receivers can be compared directly with each other in the phase comparator 86. As indicated above this may lead to a non-unambiguous location determination. By combining the output signal of the phase comparator 84, by means of which the position is "coarse" indicated however not unambiguously, with the output signal of the phase comparator 86 it will be clear that within the "coarse" determination a "fine" tuning can be applied. The evaluation unit 88 therefore provides as a result a location determination with high accuracy.

Above one has assumed that the usual antenna is present in or on the surface of the road. That is however not necessary. The transponder can be embodied also as a vertical standing loop or window antenna. Also an antenna at a certain height above the road such, that the transponder can move underneath the antenna, can be applied.

Another possibility to eliminate the ambiguity in the outputsignal of the phase measuring unit 44 is illustrated in figure 5. Instead of an elongated loop shaped antenna 32 such as in figure 2 or figure 4 in this case use is made of a series circuit of a number of much shorter loop antennas 52a, 52b, 52c,...Each of these antennas is through an own line 54a, 54b, 54c.... connected to an own receiver 56a, 56b, 56c,... in the electronic unit 38c. The outputs of the various receivers are connected to a series of field strength meters 58a, 58b, 58c,.... which supply output signals to a comparison circuit 60. All these output signals together form a curve which indicates where, above which small antenna 52a, 52b, 52c,.... the transponder has to be found. The comparison circuit 60 in fact establishes which two adjacent receivers have the largest summing amplitude of the received signals and controls the series of switches of 62a, 62b, 62c, .... such that only the output signals of these two selected receivers are transferred to the phase measuring circuit 64. The outputsignal of the phase measurement circuit 64 is taken into account by the evaluation circuit 66 together with the positions of the switches 62a, 62b, 62c,...

Above it is assumed that the transponder is an active transponder which transmits signal trains with regular intervals without being activated thereto by an externally received signal. The invention however can be applied wit good results in combination with passive transponders which become only active after reception of an activated signal and will transmit then a response signal.

Finally it is remarked that in the above description a line segment is assumed which is perpendicular to the track direction and which has its endpoints at the edges of the track. A line segment which is not ideally perpendicular but makes a small angle with the direction of the track such as caused by not accurately setting of the line segment can appear easily in practice and will in general not lead to a grave measuring error. Only if the angle is relatively large (larger than 10 degrees) then this angle should be taken into account in the evaluating means.

## Claims

1. System for determining the position of a transponder, which transmits a signal and moves along a route with at least a measuring station comprising antenna means for receiving said signal at least at two measuring points positioned at the two outer points of a line segment which crosses the course in a perpendicular manner, whereby said measuring station comprises:
- a first receiver for receiving said signal through said antenna means at the one measuring point and
- a second receiver for receiving said signal through said antenna means at the other measuring point,
- high frequency phase measuring means measuring the phase difference between the output signal of the first receiver and the outputsignal of the second receiver,
- evaluation means which, based on the measured phase difference, determines where the transponder passes said line segment.

2. System according to claim 1, **characterized in that** the transponder transmits a modulated signal, that the first receiver is followed by a first demodulator for demodulating the received signal, that the second receiver is followed by a second demodulator for demodulating the received signal, and that low frequency phase measuring means measure the phase difference between the output signal of the first demodulator and the output signal of the second demodulator.

3. System according to claim 1 and 2, **characterized in that** the evaluation means use the output signal of the low frequency phase measuring means for "coarse" position determination whereas the output signal of the high frequency phase measuring means is used for "fine" position determining.

4. System according to one of the claims 2 or 3, **characterized in that** the modulated signal is obtained by amplitude modulation whereby the modulation signal is a pulse series by means of which the amplitude of the carrier wave is modulated between 0% and 100%.

5. System according to claim 1, **characterized in that** between both ends of said line segment another N measuring points are realised such that the line segment is divided by N+2 measuring points into N+1 segments each having a length which is small enough to realise an unambiguous measurement within said segment, whereby the N+2 measuring points are connected to N+2 receivers, the output of each of said receivers is connected to a field strength measuring means, the output signals of all field strength measuring means are evaluated in a comparison circuit, which comparison circuit transfers the output signals of those two receivers having together the largest field strength, to a phase comparator to be mutually compared whereafter the resulting output signal of the phase comparator controls an evaluation unit.

6. System according to one of the preceding claims 1-4, **characterized in that** the system comprises an elongated loop antenna consisting of two parallel antenna conductors extending a short mutual distance and having a length equal to the length of said segment, which antenna conductors are connected at their ends where the measuring points are formed.

7. System according to claim 5, **characterized in that** the antenna is built as a series circuit of N+1 small loop antennas each comprising two parallel antenna conductors extending at short mutual distance of which the ends are interconnected, which loop antennas are in length direction coupled to each other.

8. System according to one of the preceding claims, **characterized in that** the measurement is repeated a number of times in a row, whereafter the results are interpolated such that from the results the track can be derived which was followed by the transponder within said course.

## Patentansprüche

1. System zum Bestimmen der Position eines Transponders, der ein Signal überträgt und sich entlang einer Route mit zumindest einer Messstation bewegt, enthaltend eine Antennenvorrichtung zum Empfangen des Signals bei zumindest zwei Messpunkten bei den zwei äußeren zwei Punkten eines Liniensegments positioniert, die den Kurs in einer rechtwinkligen Weise kreuzt, wodurch die Messstation enthält:
- einen ersten Empfänger zum Empfangen des Signals über die Antennenvorrichtung bei dem ersten Messpunkt, und
- einen zweiten Empfänger zum Empfangen des Signals über die Antennenvorrichtung bei dem anderen Messpunkt,
- eine Hochfrequenzphasenmessvorrichtung zum Messen der Phasendifferenz zwischen dem Ausgangssignal des ersten Empfängers und dem Ausgangssignal des zweiten Empfängers,
- eine Bewertungsvorrichtung zum Bestimmen, auf der Grundlage der gemessenen Phasendifferenz, wo der Transponder das Liniensegment passiert.

2. System nach Anspruch 1, **dadurch gekennzeichnet, dass** der Transponder ein moduliertes Signal überträgt, dass dem ersten Empfänger ein erster Demodulator folgt, zum Demodulieren des empfangenen Signals, dass dem zweiten Empfänger ein zweiter Demodulator folgt, zum Demodulieren des empfangenen Signals, und dass eine Niederfrequenz-Phasenmessvorrichtung die Phasendifferenz zwischen dem Ausgangssignal des ersten Demodulators von dem Ausgangssignal des zweiten Demodulators misst.

3. System nach Anspruch 1 oder 2, **dadurch gekennzeichnet, dass** die Bewertungsvorrichtung des Ausgangssignals der Niederfrequenz-Phasenmessvorrichtung für eine "grobe" Positionsbestimmung nützt, während das Ausgangssignal der Hochfrequenz-Phasenmessvorrichtung für eine "feine" Positionsbestimmung verwendet wird.

4. System nach einem der Ansprüche 2 oder 3, **dadurch gekennzeichnet, dass** das phasenmodulierte Signal durch Amplitudenmodulation erhalten wird, wodurch das Modulationssignal eine Pulsreihe ist, mittels der die Amplitude der Trägerwelle zwischen 0 und 100% moduliert wird.

5. System nach Anspruch 1, **dadurch gekennzeichnet, dass** zwischen beiden Enden des Liniensegments andere N-Messpunkt so realisiert sind, dass das Liniensegment durch N+2-Messpunkt in N+1-Segmente unterteilt wird, jeweils mit einer Länge, die klein genug ist, um eine unzweideutige Messung in dem Segment zu realisieren, wodurch die N+2-Messpunkte mit N+2-Empfängern verbunden werden, der Ausgang der Empfänger mit einer Feldstärken-Messvorrichtung verbunden ist, die Ausgangssignals sämtlicher Feldstärken-Messvorrichtungen in einer Vergleichsschaltung bewertet werden, wobei die Vergleichsschaltung die Ausgangssignale derjenigen zwei Empfänger überträgt, die zusammen die größte Feldstärke aufweisen, an einen Phasenkomparator, für einen wechselseitigen Vergleich, wonach das sich bei dem Phasenkomparator ergebende Ausgangssignal eine Bewertungseinheit steuert.

6. System nach einem der Ansprüche 1 bis 4, **dadurch gekennzeichnet, dass** das System eine verlängerte Schleifenantenne enthält, bestehend aus zwei parallelen Antennenleitern, die sich mit kurzer wechselseitiger Distanz erstrecken und eine Länge gleich zu der Länge des Segments haben, wobei die Antennenleiter bei ihren Enden verbunden sind, wo die Messpunkt gebildet sind.

7. System nach Anspruch 5, **dadurch gekennzeichnet, dass** die Antenne in eine Reihenschaltung von N+1-kleinen Schleifenantennen gebaut ist, jeweils enthaltend zwei parallele Antennenleiter, die sich bei kurzer wechselseitiger Distanz erstrecken, von denen die Enden verbunden sind, wobei die Schleifenantennen in Längsrichtung miteinander gekoppelt sind.

8. System nach einem der vorangehenden Ansprüche, **dadurch gekennzeichnet, dass** die Messung mit einer Wiederholungszahl in einer Reihe wiederholt wird, wonach die Ergebnisse zu interpoliert werden, dass anhand der Ergebnisse die Spur abgeleitet werden kann, die durch den Transponder im Verlauf seines Kurses verfolgt wurde.

## Revendications

1. Système pour déterminer la position d'un transpondeur, qui transmet un signal et se déplace le long d'un itinéraire, ayant au moins une station de mesure comprenant des moyens formant antenne permettant de recevoir ledit signal au moins en deux points de mesure positionnés aux deux points extérieurs d'un segment de droite qui croise la trajectoire d'une manière perpendiculaire, ladite station de mesure comprenant :
- un premier récepteur permettant de recevoir ledit signal par l'intermédiaire desdits moyens formant antenne au niveau du premier point de mesure et
- un deuxième récepteur permettant de recevoir ledit signal par l'intermédiaire desdits moyens formant antenne au niveau de l'autre point de mesure,
- des moyens de mesure de phases haute fréquence mesurant la différence de phases entre le signal de sortie du premier récepteur et le signal de sortie du deuxième récepteur,
- des moyens d'évaluation qui, sur base de la différence de phases mesurée, déterminent en quelle position le transpondeur franchit ledit segment de droite.

2. Système selon la revendication 1, **caractérisé en ce que** le transpondeur transmet un signal modulé, **en ce que** le premier récepteur est suivi d'un premier démodulateur permettant de démoduler le signal reçu, le deuxième récepteur est suivi d'un deuxième démodulateur permettant de démoduler le signal reçu et des moyens de mesure de phases basse fréquence mesurent la différence de phases entre le signal de sortie du premier démodulateur et le signal de sortie du deuxième démodulateur.

3. Système selon les revendications 1 et 2, **caractérisé en ce que** les moyens d'évaluation utilisent le signal de sortie des moyens de mesure de phases basse fréquence pour effectuer une détermination "grossière" d'une position tandis que le signal de sortie des moyens de mesure de phases haute fréquence est utilisé pour effectuer une détermination "fine" d'une position.

4. Système selon l'une des revendications 2 et 3, **caractérisé en ce que** le signal modulé est obtenu par modulation d'amplitude, de telle manière le signal de modulation est une série d'impulsions à l'aide de laquelle l'amplitude de l'onde porteuse est modulée entre 0 % et 100 %.

5. Système selon la revendication 1 **caractérisé en ce que**, entre les deux extrémités dudit segment de droite, N points de mesure supplémentaires sont établis de sorte que le segment de droite est divisé par N+2 points de mesure en N+1 segments ayant chacun une longueur qui est suffisamment petite pour représenter une mesure sans ambiguïté dans ledit segment, de telle manière que les N+2 points de mesure sont connectés à N+2 récepteurs, la sortie de chacun desdits récepteurs est connectée à des moyens de mesure d'intensité de champ, les signaux de sortie de tous les moyens de mesure d'intensité de champ sont évalués dans un circuit de comparaison, lequel circuit de comparaison transfère les signaux de sortie des deux récepteurs ayant ensemble la plus grande intensité de champ à un comparateur de phases de façon à les comparer mutuellement, puis le signal de sortie résultant provenant du comparateur de phases commande une unité d'évaluation.

6. Système selon l'une des précédentes revendications 1 à 4, **caractérisé en ce que** le système comprend une antenne cadre allongée se composant de deux conducteurs d'antenne parallèles, s'étendant à une courte distance mutuelle et ayant une longueur égale à la longueur dudit segment, lesquels conducteurs d'antenne sont connectés au niveau de leurs extrémités aux endroits où les points de mesure sont formés.

7. Système selon la revendication 5, **caractérisé en ce que** l'antenne est construite comme un circuit en série de N+1 petites antennes cadres comprenant chacune deux conducteurs d'antenne parallèles s'étendant à une courte distance mutuelle et dont les extrémités sont interconnectées, lesquelles antennes cadres sont couplées l'une à l'autre dans le sens de la longueur.

8. Système selon l'une des précédentes revendications, **caractérisé en ce que** la mesure est répétée plusieurs fois de suite, puis les résultats sont interpolés de telle sorte qu'à partir des résultats, il est possible d'établir le cheminement qui a été suivi par le transpondeur dans ladite trajectoire.
